# EUROPEAN PATENT SPECIFICATION

(11) **EP 2 678 988 B1**
(45) Date of publication and mention of the grant of the patent: **05.08.2015**
(21) Application number: 11714602.7
(22) Date of filing: 22.02.2011
(51) Int. Cl.: H04L 29/06, H04N 21/442

(54) **MEDIA SWITCHING UNIT AND METHOD**
MEDIUMUMSCHALTEINHEIT UND VERFAHREN
APPAREIL ET PROCÉDÉ DE COMMUTATION DE FLUX MULTIMÉDIA

(43) Date of publication of application: 01.01.2014
(73) Proprietor: Telefonaktiebolaget L M Ericsson (PUBL), 164 83 Stockholm (SE)
(72) Inventor: JOHNSSON, Andreas, S-754 43 Uppsala (SE); DAMOLA, Ayodele, S-169 59 Solna (SE); MEIROSU, Catalin, S-112 26 Stockholm (SE)
(74) Representative: Ericsson
(86) International application number: PCT/IB2011/000348
(87) International publication number: WO 2012/114140

(56) References cited:
- WO-A1-01/86456
- US-A1- 2008 271 069
- US-A1- 2010 107 191
- US-A1- 2010 198 943
- YUAN J ET AL: "A novel framework for improving bandwidth utilization for VBR video delivery over widearea networks", 30 January 2007 (2007-01-30), VISUAL COMMUNICATIONS AND IMAGE PROCESSING; 30-1-2007 - 1-2-2007; SAN JOSE,, XP030081167, pages 1-5, page 2 - page 4

## Description

### TECHNICAL FIELD

The present invention generally relates to systems, software and methods and, more particularly, to mechanisms and techniques for providing main media content with a predetermined quality to a display or alternate media content when the main media content cannot be provided with the predetermined quality.

### BACKGROUND

The mobile and fixed user terminals are capable, for example, to provide media content (data, video, text, games, etc.) from various sources to the user. There is a tendency to stream media content over a communication network to the user so that the user can watch on the user terminal a video or other multimedia from a variety of sources. One such application streams multimedia that is being constantly received by the user terminal over a packet switched network (e.g., Internet or a mobile network). Examples of popular services that provide streaming media include Youtube (www.youtube.com), SVT play (www.svtplay.se), BBC iPlayer (http://www.bbc.co.uk/iplayer/radio), Google TV (www.google.com/tv/) and Voddler (www.voddler.com). These are only some of the possible services available on the market. Those skilled in the art would appreciate that other services exist and also may appear in the future to provide media content. As noted above, these services may be offered to fixed or mobile user-terminals.

Mobile internet protocol television (IPTV) is another service that extends the Internet-based multimedia services into telecommunication provider networks by introducing network support for streaming media. Standardization activities in this area are ongoing as noted, for example, in Open IPTV Forum (see http://openiptvforum.org/) and ITU-T FG IPTV (http://www.itu.int/ITU-T/IPTV/). A general overview of mobile IPTV may be found in S. Park and S. Jeong, "Mobile IPTV: Approaches, Challenges, Standards and QoS Support", IEEE Internet Computing, Vol. 13, Issue 3, pp. 23-31, May-June 2009. The patent publication WO 01/86456 A1 discloses delivering alternate material related to a primary media stream when the available bandwidth is limited.

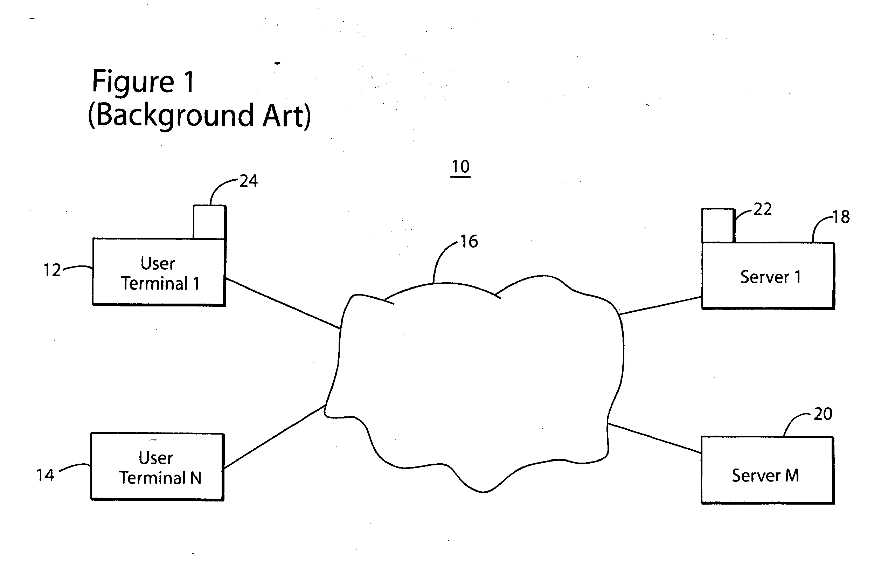

Transferring multimedia content from a server to a user terminal is schematically illustrated in Figure 1. As shown in Figure 1, a system 10 includes plural user terminals 12 and 14, a communication network 16 and plural servers 18 and 20 that provide the media content. To transfer multimedia content from the server 18 to the user device 12, first the multimedia content is encoded by an encoding unit 22 of the server 18 into a bit stream using codecs such as MPEG-4 (see http://www.mpegif.org/ for video). Thereafter, the encoded multimedia content is transferred over the communication network 16 via different protocols, e.g., unicast, multicast or peer-2-peer technology. The bits received by the user terminal 12 are stored into an application play-out buffer 24. This buffer 24 feeds, for example, a monitor of the user terminal for displaying the transferred media content. The buffer 24 compensates for short-term transfer speed fluctuations in the system, i.e., if the available bandwidth of the communication network 16 decreases, by still provide enough information to the monitor for a short period of time.

The communication network capacity determines how long time it takes before the user can start watching (or continuing to watch after a buffering event) a given content as the time to build up the play-out buffer depends on the available network capacity. The choice of the codec (i.e., multimedia quality) used to compress/decompress the media stream also influences the time necessary before the user can start watching a given content.

However, given the large increase of users that streamline the desire content and the slow increase of capacity of the exiting communication networks, there are instances when the communication network cannot keep up with the bandwidth demand or the servers providing the media content cannot provide the media content with a predetermined quality. Current multimedia systems react to these communication network/server events by either decreasing the quality of the video down to some lower limit or by temporarily pausing a play out process. While the streaming is paused, the image displayed at the user terminal is either frozen or showing a message such as "buffering".

This reaction of the current multimedia systems is undesirable as the users do not like to pause the watched video because of the buffering problems. Thus, there is a need for finding a solution to avoid freezing the image or displaying annoying messages to the users. Accordingly, it would be desirable to provide devices, systems and methods that avoid the afore-described problems and drawbacks.

### SUMMARY

Assets as, for example, media content are desired to be provided to the users from various locations over a communication network. However, the existing systems may fail to provide the desired content at a desired quality and thus have to reduce the quality or not provide, temporarily, the desired content. The prior-art problems are solved by the invention according to the independent claims 1, 11 and 15.

According to one exemplary embodiment, there is a method for selectively downloading media content through a communication network and selectively displaying the media content at a user terminal connected to the communication network. The method includes receiving main media content at the user terminal; determining at the user terminal level whether there are streaming resources available to maintain a predetermined quality of streaming the main media content; receiving secondary media content when the streaming resources are above a predetermined level; and displaying the main media content when the streaming resources are above the predetermined level and automatically displaying the secondary media content when the streaming resources are below the predetermined level. A switching functionality of the user terminal is configured to select which media content to be displayed as a function of the streaming resources.

According to another exemplary embodiment, there is a user terminal configured to selectively download media content through a communication network and selectively display the media content. The user terminal includes a main play-out buffer configured to receive main media content; a streaming detection unit configured to determine whether there are streaming resources available to maintain a predetermined quality of streaming the main media content, wherein the streaming detection unit is also configured to determine a state of the main play-out buffer; a secondary play-out buffer configured to receive secondary media content when the streaming resources are above a predetermined level, wherein the streaming detection unit is also configured to determine a state of the secondary play-out buffer; and a media switching unit connected to the streaming detection unit and configured to select whether to display the main media content or the secondary media content based on a result of the streaming detection unit. The main media content is displayed when the streaming resources are above the predetermined level and the secondary media content is automatically displayed when the streaming resources are below the predetermined level.

According to still another exemplary embodiment, there is a media application in a user terminal configured to selectively download media content through a communication network and selectively display the media content. The media application includes an interface configured to receive a state of a main play-out buffer that receives main media content, wherein the main media content is selected by a user of the user terminal; a streaming detection unit configured to determine whether there are streaming resources available to maintain a predetermined quality of streaming the main media content, wherein the streaming detection unit is also configured to receive the state of the main play-out buffer; the interface is further configured to receive a state of a secondary play-out buffer that receives secondary media content when the streaming resources are above a predetermined level, wherein the streaming detection unit is also configured to receive the state of the secondary play-out buffer; and a media switching unit connected to the streaming detection unit and configured to select whether to display the main media content or the secondary media content based on a result of the streaming detection unit. The main media content is displayed when the streaming resources are above the predetermined level and the secondary media content is automatically displayed when the streaming resources are below the predetermined level.

It is an object to overcome some of the deficiencies discussed in the previous section and to provide a mechanism for switching between a main media content and a secondary media content when a display quality of the main media content cannot be maintained. One or more of the independent claims advantageously provides a switching functionality or a media switching unit in a user terminal that achieves this function.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a network connecting user terminals to media servers;
Figure 2 is a flowchart of a method for switching between main and secondary media content in a user terminal according to an exemplary embodiment;
Figure 3 is a schematic diagram of a user terminal that has a switching functionality for switching between content according to an exemplary embodiment;
Figure 4 is a graph showing a bandwidth versus time and how a switching functionality switches between content according to an exemplary embodiment;
Figure 5 is a flowchart illustrating how a switching functionality controls buffers according to an exemplary embodiment;
Figure 6 is a schematic diagram of a functionality for determining states of various components of a user terminal according to an exemplary embodiment;
Figure 7 is a flowchart of a method for switching between content according to an exemplary embodiment; and
Figure 8 is a schematic diagram of a user terminal having a switching functionality according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a user terminal that receives from a communication network streams of desired content and display them. However, the embodiments to be discussed next are not limited to a user terminal but may be applied to other existing systems, e.g., a communication network, a node, etc.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification is not necessarily all referring to the same embodiment. Further, the particular features, structures or characteristics may be combined in any suitable manner in one or more embodiments.

According to an exemplary embodiment, a user terminal is configured to utilize extra network capacity, when available, for building up not only a main play-out buffer (a buffer that receives the desired media content selected by the user) but also for building alternate media content (e.g., advertisements, weather information, traffic information, sport information or other information of possible interest to the user) in a secondary play-out buffer. In addition, the user terminal may be configured to display the alternate media content when a minimum streaming-media rate for the main media content is temporarily not available. Thus, according to this exemplary embodiment, during the time the alternate media content is displayed, the main play-out buffer has the opportunity to rebuild itself. The user terminal may be also configured to switch back to the main media content when the main play-out buffer has enough data to sustain the desired quality of the displayed media content or when the communication network has enough streaming resources to meet the desired display quality.

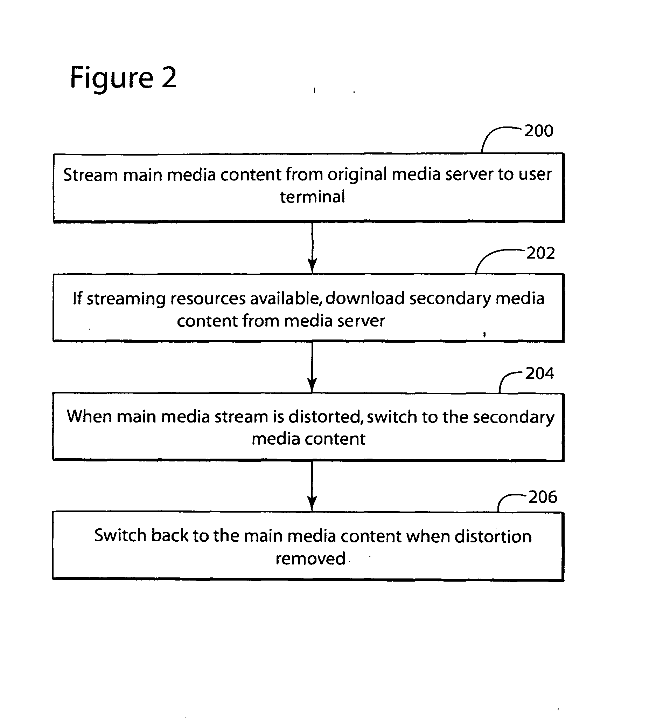

A general functionality for achieving a media switching as discussed above is now presented in regard to Figure 2. According to the exemplary embodiment illustrated in Figure 2, main media content is streaming in step 200 from an original or main media server to the user terminal across a network. The main media stream may require a minimum bandwidth capacity (minimum level) for displaying, e.g., a video with a predetermined quality on the display of the user terminal. A lower network capacity than the minimum bandwidth capacity determines a lower video quality for the user, which is undesirable. The available capacity is determined by the network status over time.

The user terminal may be configured (as will be discussed later) to have various functionalities for determining when the network has spare capacity, i.e., above the minimum capacity required for providing the main media content with the desired quality. When this condition is met, the user terminal uses the spare network capacity not required by the main media content download for downloading alternate or secondary media content in step 202. The alternate media content may be provided by the original or main server that provides the main media content or by a different server, the secondary media server. The secondary media content may be, for example, advertisements or other personal content.

In step 204, a determination may be made by the user terminal whether the main media content stream is distorted, e.g., there is a decrease in the network capacity, or there is a congestion at the main media server prevents the main media content to arrive at the user terminal, or the main play-out buffer is under-run, or other causes. When a distortion is determined, a switching functionality of the user terminal switches the stream fed to the display from the main media content stream to a secondary media content stream (from a secondary play-out buffer). The secondary play-out buffer, by storing, for example, advertisement information, is able to display this information on the display until the main play-out buffer has enough data to sustain a desired streaming quality.

In step 206, the switching functionality switches back to the main media content stream to be provided to the display when the distortion in step 204 is removed. This may happen when the data stored by the main play-out buffer is large enough or when the streaming rate reaches above a desired threshold. The above noted algorithm may be implemented in software, hardware or a combination thereof as discussed later.

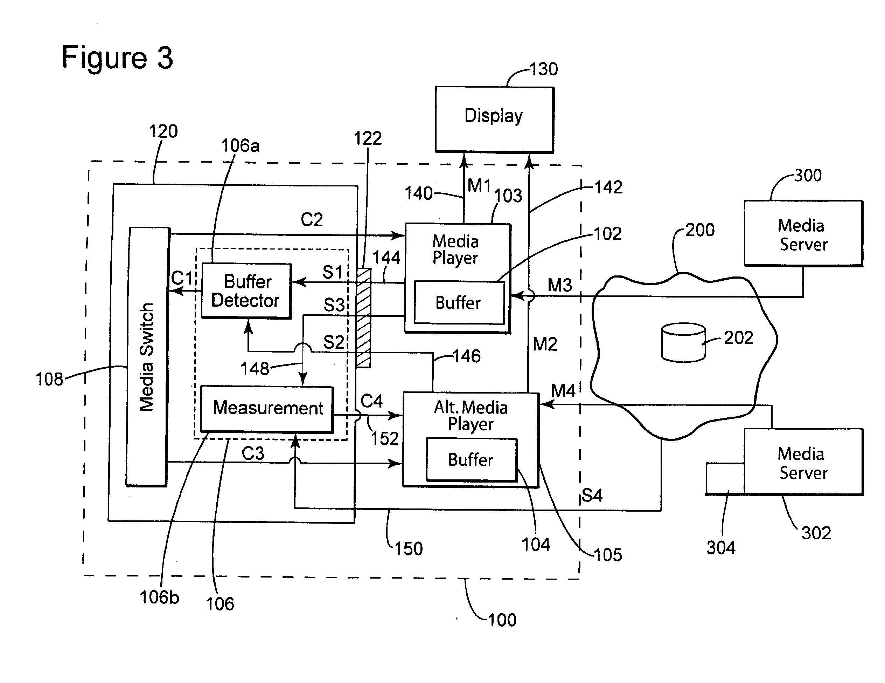

One possible implementation of the above noted algorithm is now discussed with reference to Figure 3. According to this exemplary embodiment, a user terminal 100 may be a mobile phone, a tablet like device, a top box, a DVD player, a TV set or other similar devices that are configured to communicate with a communication network and present media content to a user. The user terminal 100 is connected to the communication network 200, which may be the Internet, a mobile communication network, a fixed communication network, etc. The network 200 may be connected to a main media server 300 and an alternate (secondary) media server 302. The terms main and secondary do not imply any advantage or preference of one server over the other. These terms are used herein only to indicate that a user may prefer media content from the main server and if this media content is not available, then the user may be presented with media content from the secondary media server.

The user terminal 100 may include a main play-out buffer 102, a secondary play-out buffer 104, and a media application module 120. Alternatively, the user terminal 100 may include a display 130. However, it is noted that the display 130 does not have to be part of the user terminal 100. The main play-out buffer 102 may be part of a media player functionality 103 while the secondary play-out buffer 104 may be part of a media player functionality 105. These functionalities involve dedicated software for receiving, manipulating and feeding media content. In this respect, the main play-out buffer 102 is configured to receive the main media content, via the network 200, from the main media server 300. Similarly, the secondary play-out buffer 104 is configured to receive the secondary media content, via the network 200 or via another network, from the secondary media server 302. In one application, the main media server 300 and the secondary media server 302 are the same server.

For the sake of simplicity, it is considered in this exemplary embodiment that the main media server and the secondary media server are different entities and both of them are connected to the same network. Also, this embodiment shows the media servers being outside the network. However, in one application, one or both of the media servers are part of the network. Such a server or database 202 is illustrated in Figure 3.

As noted above, the user selects a desired media content, the main media content. The secondary media content may be either selected by the user or by the operator of the network. The operator of the network may select the secondary media content, to be displayed when the main media content cannot be displayed, based, for example, on preferences of the user, or a geographical location of the user terminal, or based on the network operator interest, or based on other considerations.

Both the main play-out buffer and the secondary play-out buffer are configured to communicate with the display 130 to provide the corresponding media content. Links 140 and 142 are illustrated in the figure for providing the communication between the buffers and the display. For controlling which play-out buffer to provide the media content to the display 130, a state of each play-out buffer is determined by a streaming detection unit 106. For this reason, the streaming detection unit 106 is connected via links 144 and 146 to the play-out buffers. The streaming detection unit 106 may include a state buffer detector unit 106a and a measurement unit 106b. An interface 122 may be provided to receive information from the two buffers. The state buffer detection unit and the measurement unit are discussed next.

The state buffer detector unit 106a is configured to determine a state of the play-out buffers. These states may be indicative of the buffer reaching a minimum threshold, i.e., buffer under-run and/or of the buffer reaching a high threshold, i.e., buffer is ok. These states are transmitted from the buffer detector unit 106a to a media switch unit 108, which may be part of the media application module 120 or may be a unit outside this module.

The measurement unit 106b may be configured to receive a state of the main play-out buffer (see link 148) and also a state of the network 200 via link 150. The state of the main play-out buffer may include a buffer trend, e.g., buffer is being depleted of information faster than receiving new information, which signals that soon the supply of the main media content to the display is going to be impacted (e.g., delayed). The state of the network may include a bandwidth capability of the network for streaming the main media content, loss, delay, etc. The measurement unit 106b may be configured to actively perform these measurements.

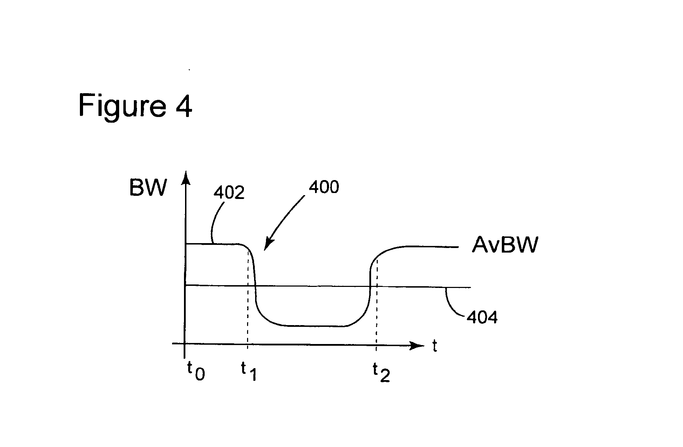

For example, suppose that a bandwidth 400 of the network 200 available for downloading the main media content varies over time as shown in Figure 4 (bandwidth is shown in the y axis and time on the x axis). More specifically, the available bandwidth 402 between t0 and t1 is considered to be above a minimum threshold 404. This threshold is, for example, the minimum bandwidth necessary for the main media content to run with the desired quality. Any bandwidth below this threshold would affect the quality of the media content displayed on the display 130. However, it is noted that the bandwidth falls below the threshold 404 between t1 and t2 and then it recovers after time t2. Based on this and other measurements, the measurement unit 106b may decide when to instruct the alternate media player functionality 105 to start to download the secondary media content to the secondary play-out buffer 104. Based on the same measurement or measurements, the media switch 108 may determine when to activate the secondary play-out buffer to send the information to the screen (e.g., between t1 and t2 when the available bandwidth for the main play-out buffer is too low to maintained a predetermined quality of the image). For the specific example shown in Figure 4, it is noted that for the time period t1 to t2, the measurement unit 106b may instruct the secondary play-out buffer to not download the secondary media content as there is not enough bandwidth for the main media content. These instructions may be provided along a dedicated link 152 directly to the alternate media player functionality 105. In one application, the measurement unit 106b does not communicate with the media switching unit 108.

The communications between the various units of the media application 120 and also between the media application 120 and the network, the media servers, and the display are illustrated in Figure 3 and discussed next. Each link is shown labeled with a letter, where M stands for a media stream, C for a control message and S for a state update. The media streams are M1: media stream from main buffer to display, M2: media stream from secondary buffer to display, M3: media stream from original media server to main buffer, and M4: media stream from secondary server. The following control messages are used in Figure 4, C1: control message sent to media switching if the main buffer reaches a lower threshold, C2: start/stop control message to the main media player, C3: start/stop control message to the alternate media player, and C4: start/stop control message for downloading content to the alternate media buffer dependent on network resources and main application buffer trends (increasing/decreasing). The states used for controlling the buffers are S1: state update of main buffer size, S2: state update on secondary buffer size, S3: state update on main buffer size, and S4: state update on network resources based on active measurements.

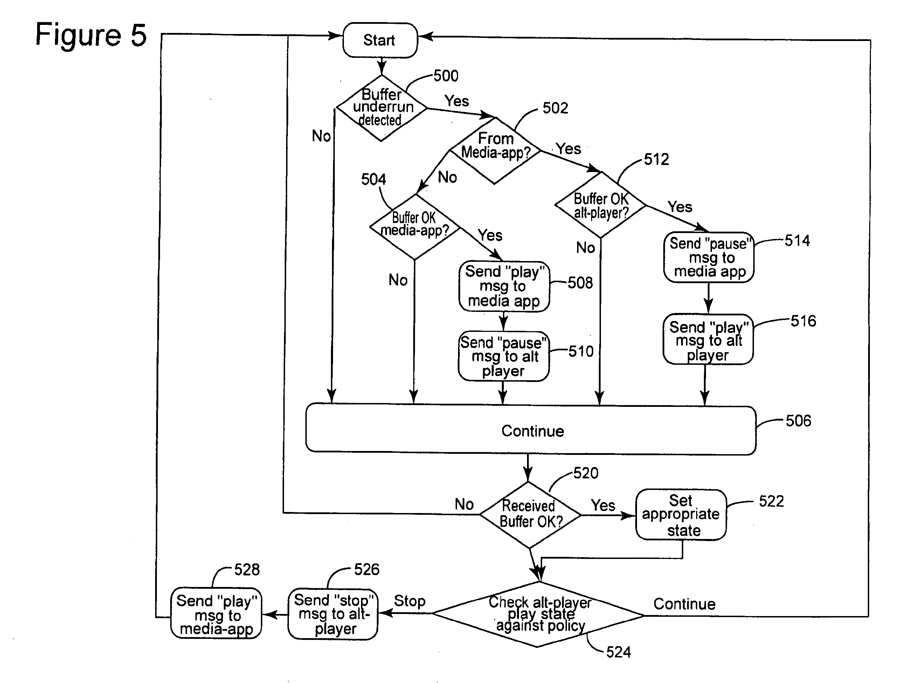

With regard to the switching unit 108, this unit is configured to coordinate the various states of the main and secondary play-out buffers and to send control messages to them, e.g., when to download information and when to provide their information to the display. It is noted that the switching unit 108 and the streaming detection unit 106 may be implemented in dedicated circuitry, a processor, software or a combination thereof as dictated by the circumstances. A possible algorithm for controlling the main and secondary buffers is now discussed with Figure 5.

Starting with step 500, a detection is made whether a buffer under-run state is present. If not, the process advances to step 506. This detection may be made in the buffer detection unit 106a or the media switching unit 108 based on states S1 and S2. Assuming that such a state is detected in step 500, the process continues to step 502 where it is determined whether the received state is related to the main buffer. If the answer is no the process advances to step 504 in which it is determined whether the main buffer is ok. If the answer is no, the process advances to step 506 or otherwise to step 508. In step 508, as the main buffer is ok, the control message C2 is sent by the media switching unit 108 to the main media player application 103 to instruct the main buffer 102 to provide its media content M1 to the display 130. Next, the media switching unit 108 sends the control message C3 to the alternate media player application 105 to instruct the secondary buffer 104 to pause sending media content M2 to the display 130. After this, the process advances to step 506.

However, if the result of step 502 is that the received state is from the main media player application 103, then the process advances to step 512 in which it is determined whether the secondary buffer is ok. If the answer is no the process advances to step 506 or otherwise to step 514. In step 514, the switching unit 108 sends a pause control message to the main media player application 103 to stop the main buffer and in step 516 it sends a play message to the alternate media player application 105 for instructing the buffer 104 to send its media content to the display 130.

From step 506, the process advances to step 520 where a check is made to determine whether a buffer ok state was received. If the answer is no the process returns to step 500 or otherwise it advances to step 522. In step 522 the state of the buffers are set to true or false as is the case and in step 524 various policy matters may be checked for the alternate media player application. An example of such a policy is when to start/stop the secondary media content. Other policies may be envisioned. If the answer in step 524 is to continue, the process returns to step 500 or otherwise advances to step 526 in which the secondary buffer is instructed to stop and to step 528 in which the main buffer is instructed to play. Then, the process returns to step 500.

Having discussed a possible configuration of the media application 120 and an algorithm for controlling the play-out of the main and secondary media content to a display 130, next some details about the various elements of the media application 120 are discussed. The buffer detection unit 106a may be configured that, upon a buffer reaching a minimum threshold, the buffer detection unit 106a sends a message buffer under-run(buffer_id) to the media switching unit 108 via a C1 control message where buffer_id either corresponds to the main media application buffer or to the alternate media application buffer. When the main media application buffer reaches a high threshold, the buffer detection unit 106a sends a message buffer OK(buffer_id) to the media switching unit 108 via the C1 control message.

The media switching unit 108 may be configured to switch back and forth between the main buffer and the secondary buffer based on various parameters and/or policies determined by the user or the network operator. The switching is determined at least based on the states of the two buffers. The media switching unit obtains buffer information from the buffer detection unit 106a via the C1 control message. The media switching unit may start/stop/pause the media applications via C2 and C3 control messages as discussed with reference to Figure 5.

The measurement unit 106b may be configured to obtain state information from the main media player application 103 via S3 (e.g., by observing buffer trends) and from the network 200 via S4 (e.g., through active measurements that provides parameters such as loss, delay, available capacity, etc.). The measurement unit 106b can communicate via control message C4 with the alternate media player application to start/stop/pause downloading of ads or other personal content from the secondary media server.

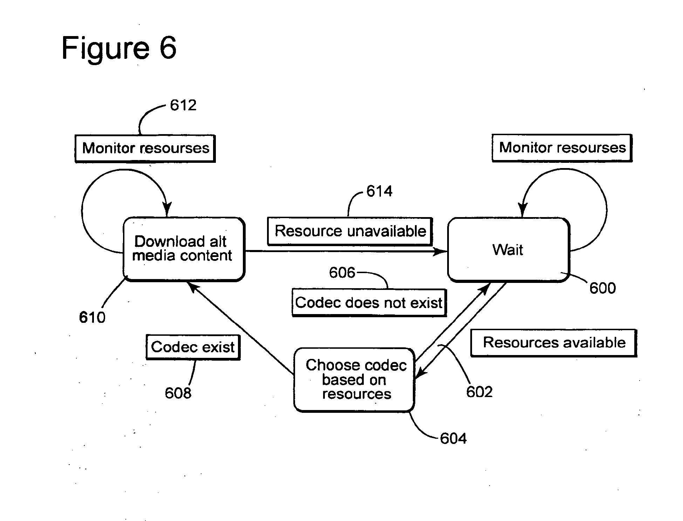

A state machine describing a possible functional implementation of the measurement unit 106b is now discussed with regard to Figure 6. Starting in step 600, the measurement unit 106b monitors streaming resources. Streaming resources may include network resources, e.g., available bandwidth, or resources inside the user terminal. Such a streaming resource is the available space or the buffer size or a buffer under-run condition of the main buffer 102. Other resources that may impact the quality of the main media content provided to the display 130 may be considered. Upon detecting in step 602 that streaming resources are available, a codec for streaming the media content is selected in step 604. However, if a codec is determined in step 606 to not be available, the measurement unit 106b returns to a waiting state in step 600. If the codec is determined to exist in step 608, the measurement unit 106b instructs in step 610 the secondary media player application 105 to start downloading the secondary media content. A step 612 of monitoring the streaming resources is performed. If the streaming resources become insufficient to ensure the predetermined quality of the main media content displayed on the display 130, the measurement unit 106b returns in step 614 to the waiting state of step 600.

With regard to the main media server 300, this may be a standard server for streaming content. However, the secondary media server 302 may still be a traditional server but, for example, oriented towards advertisements, which could be personalized. For this reason, an end user database 304 may be provided to this server and may include information on user preferences with respect to advertisements. This database may be co-located with the advertisements and personal content server.

According to one or more embodiments, a mechanism is advantageously provided to mask from the user network problems and seamlessly integrate advertisements or other information into the streaming experience. Another aspect provides a mechanism to "at least show some media", even if the user enters some geographical area not covered e.g., by mobile broadband, or if the media quality drops below some threshold due to network congestion. Still another aspect capitalizes on unused network capacity while not impacting on the quality of the media stream.

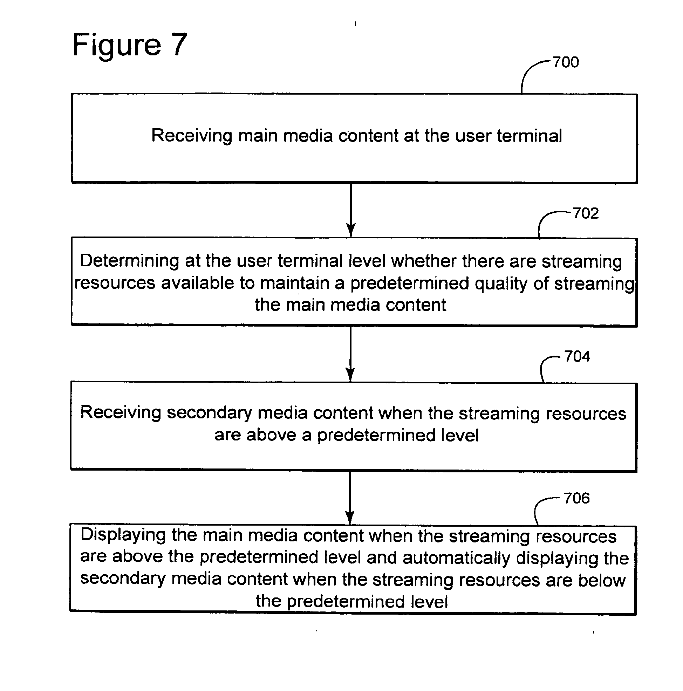

According to an exemplary embodiment illustrated in Figure 7, there is a method selectively downloading media content through a communication network and selectively displaying the media content at a user terminal connected to the communication network. The method includes a step 700 of receiving main media content at the user terminal, wherein the main media content is selected by a user of the user terminal; a step 702 of determining at the user terminal level whether there are streaming resources available to maintain a predetermined quality of streaming the main media content; a step 704 of receiving secondary media content when the streaming resources are above a predetermined level; and a step 706 of displaying the main media content when the streaming resources are above the predetermined level and automatically displaying the secondary media content when the streaming resources are below the predetermined level. A switching functionality of the user terminal is configured to select which media content to be displayed as a function of the streaming resources.

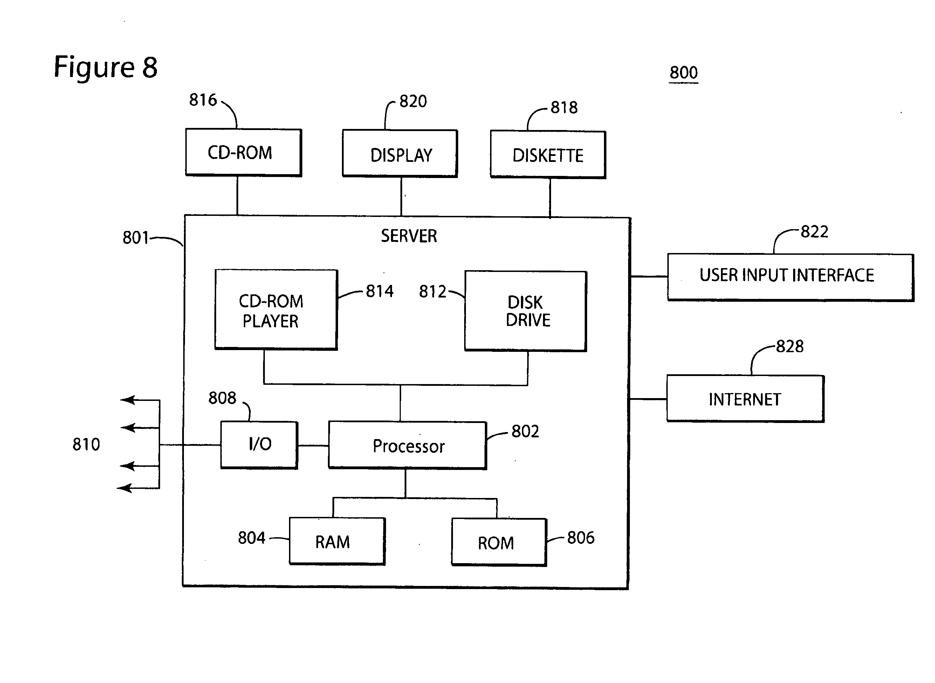

An example of a representative user terminal capable of carrying out operations in accordance with the exemplary embodiments is illustrated in Figure 8. Hardware, firmware, software or a combination thereof may be used to perform the various steps and operations described herein. The structure 800 of Figure 8 is an exemplary computing structure that may be used in connection with such a system.

The exemplary user terminal 800 suitable for performing the activities described in the exemplary embodiments may include a server 801. Such a server 801 may include a central processor (CPU) 802 coupled to a random access memory (RAM) 804 and to a read-only memory (ROM) 806. The ROM 806 may also be other types of storage media to store programs, such as programmable ROM (PROM), erasable PROM (EPROM), etc. The storage devices 804 and 806 may be used to implement the buffers 102 and 104. The processor 802 may communicate with other internal and external components through input/output (I/O) circuitry 808 and bussing 810, to provide control signals and the like. The processor 802 carries out a variety of functions as is known in the art, as dictated by software and/or firmware instructions.

The server 801 may also include one or more data storage devices, including hard and floppy disk drives 812, CD-ROM drives 814, and other hardware capable of reading and/or storing information such as DVD, etc. In one embodiment, software for carrying out the above discussed steps may be stored and distributed on a CD-ROM 816, diskette 818 or other form of media capable of portably storing information. These storage media may be inserted into, and read by, devices such as the CD-ROM drive 814, the disk drive 812, etc. The server 801 may be coupled to a display 820, which may be any type of known display or presentation screen, such as LCD displays, plasma display, cathode ray tubes (CRT), etc. A user input interface 822 is provided, including one or more user interface mechanisms such as a mouse, keyboard, microphone, touch pad, touch screen, voice-recognition system, etc.

The server 801 may be coupled to other computing devices, such as the landline and/or wireless terminals and associated watcher applications, via a network. The server may be part of a larger network configuration as in a global area network (GAN) such as the Internet 828, which allows ultimate connection to the various landline and/or mobile client/watcher devices.

The disclosed exemplary embodiments provide a user terminal, a method and a computer program product for switching between buffers for providing continuous media content, if possible, to a display. It should be understood that this description is not intended to limit the invention. On the contrary, the exemplary embodiments are intended to cover alternatives, modifications and equivalents, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

As also will be appreciated by one skilled in the art, the exemplary embodiments may be embodied in a wireless communication device, a fixed device, a telecommunication network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer readable medium may be utilized including hard disks, CD-ROMs, digital versatile disc (DVD), optical storage devices, or magnetic storage devices such a floppy disk or magnetic tape. Other non-limiting examples of computer readable media include flash-type memories or other known memories.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a specifically programmed computer or processor.

## Claims

1. A method for selectively downloading media content through a communication network (200) and selectively displaying the media content at a user terminal (100) connected to the communication network (200), the method comprising:
receiving main media content at the user terminal (100), wherein the main media content is selected by a user of the user terminal (100);
determining at the user terminal level whether there are streaming resources available to maintain a predetermined quality of streaming the main media content;
receiving secondary media content at the user terminal (100) after receiving said main media content when the streaming resources are above a predetermined level; and
displaying the main media content when the streaming resources are above the predetermined level and automatically displaying the secondary media content when the streaming resources are below the predetermined level,
wherein a switching functionality (108) of the user terminal (100) is configured to select which media content is to be displayed as a function of the streaming resources.

2. The method of Claim 1, further comprising:
switching back to displaying the main media content when the streaming resources are above the predetermined level.

3. The method of Claim 1, wherein the streaming resources include at least one of (i) an amount of main media content available to be streamed to a display from a main play-out buffer of the user terminal, and (ii) a streaming rate of the main media content between the communication network and the main play-out buffer.

4. The method of Claim 1, further comprising:
measuring the streaming resources with a measurement functionality (106b) of the user terminal.

5. The method of Claim 4, wherein the measuring further comprises:
receiving state information of main and secondary play-out buffers that store the main and secondary media contents downloaded from the communication network; and
measuring one or more parameters of the communication network, wherein the one or more parameters include at least one of a loss, a delay, and available capacity.

6. The method of Claim 1, further comprising:
receiving the secondary media content simultaneously with the primary media content when the streaming resources are above the predetermined level.

7. The method of Claim 1, wherein the switching functionality is configured to receive a state of a main play-out buffer of the user terminal and a state of a secondary play-out buffer of the user terminal, wherein the main play-out buffer is configured to receive the main media content and the secondary play-out buffer is configured to receive the secondary media content.

8. The method of Claim 7, wherein the switching functionality (108) is configured to control whether the main or secondary play-out buffer feeds a display connected to the user terminal.

9. The method of Claim 7, wherein a buffer detector functionality (106a) of the user terminal is configured to determine the state of the main and secondary play-out buffers and provide this information to the switching functionality.

10. The method of Claim 1, further comprising:
supplying continuously to a display the main media content or the secondary media content such that the user is not presented with the main media content streamed with a quality below the predetermined quality or with a frozen image.

11. A user terminal (100) configured to selectively download media content through a communication network (200) and selectively display the media content, the user terminal (100) comprising:
a main play-out buffer (102) configured to receive main media content, wherein the main media content is selected by a user of the user terminal (100);
a streaming detection unit (106) configured to determine whether there are streaming resources available to maintain a predetermined quality of streaming the main media content, wherein the streaming detection unit (106) is also configured to determine a state of the main play-out buffer (102);
a secondary play-out buffer (104) configured to receive secondary media content after said main media content is received via said main play-out buffer (102) when the streaming resources are above a predetermined level, wherein the streaming detection unit (106) is also configured to determine a state of the secondary play-out buffer (104); and
a media switching unit (108) connected to the streaming detection unit (106) and configured to select whether to display the main media content or the secondary media content based on a result of the streaming detection unit (106),
wherein the main media content is displayed when the streaming resources are above the predetermined level and the secondary media content is automatically displayed when the streaming resources are below the predetermined level.

12. The user terminal of Claim 11, wherein the streaming resources include at least one of (i) an amount of main media content available to be streamed to a display from the main play-out buffer, and (ii) a streaming rate of the main media content between the communication network and the main play-out buffer.

13. The user terminal of Claim 11, wherein the streaming detection unit (106) comprises:
a buffer detection unit (106a) connected to the main and secondary play-out buffers and to the media switching unit and configured to determine the state of the main and secondary play-out buffers; and
a measurement unit (106b) connected to the communication network and to the media switching unit, and configured to measure streaming resources of the communication network.

14. The user terminal of Claim 13, wherein the buffer detection unit is configured to receive state information of the main and secondary play-out buffers, and the measurement unit is configured to measure one or more parameters of the communication network, wherein the one or more parameters include at least one of a loss, a delay, and available capacity.

15. A media application module (120) for a user terminal (100) configured to selectively download media content through a communication network (200) and selectively display the media content, the media application module (120) comprising:
an interface (122) configured to receive a state of a main play-out buffer (102) that receives main media content, wherein the main media content is selected by a user of the user terminal;
a streaming detection unit (106) configured to determine whether there are streaming resources available to maintain a predetermined quality of streaming the main media content, wherein the streaming detection unit (106) is also configured to receive the state of the main play-out buffer (102);
the interface (122) is further configured to receive a state of a secondary play-out buffer (104) that receives secondary media content after said main media content is received via said main play-out buffer (102) when the streaming resources are above a predetermined level, wherein the streaming detection unit (106) is also configured to receive the state of the secondary play-out buffer (104); and
a media switching unit (108) connected to the streaming detection unit (106) and configured to select whether to display the main media content or the secondary media content based on a result of the streaming detection unit (106),
wherein the main media content is displayed when the streaming resources are above the predetermined level and the secondary media content is automatically displayed when the streaming resources are below the predetermined level.

## Patentansprüche

1. Verfahren zum selektiven Herunterladen von Medieninhalten durch ein Kommunikationsnetz (200) und zum selektiven Anzeigen der Medieninhalte auf einem Teilnehmergerät (100), das mit dem Kommunikationsnetz (200) verbunden ist, wobei das Verfahren Folgendes umfasst:
Empfangen von Hauptmedieninhalten am Teilnehmergerät (100), wobei die Hauptmedieninhalte durch einen Benutzer des Teilnehmergerätes (100) ausgewählt werden;
Bestimmen, auf der Teilnehmergerät-Ebene, ob Streaming-Ressourcen verfügbar sind, um eine zuvor festgelegte Qualität des Streamings der Hauptmedieninhalte aufrecht zu erhalten;
Empfangen sekundärer Medieninhalte in dem Teilnehmergerät (100) nach dem Empfangen der Hauptmedieninhalte, wenn die Streaming-Ressourcen oberhalb eines zuvor festgelegten Pegels liegen; und
Anzeigen der Hauptmedieninhalte, wenn die Streaming-Ressourcen oberhalb des zuvor festgelegten Pegels liegen, und automatisches Anzeigen der sekundären Medieninhalte, wenn die Streaming-Ressourcen unterhalb des zuvor festgelegten Pegels liegen,
wobei eine Umschaltfunktionalität (108) des Teilnehmergerätes (100) dafür konfiguriert ist, anhand der Streaming-Ressourcen auszuwählen, welche Medieninhalte angezeigt werden sollen.

2. Verfahren nach Anspruch 1, das des Weiteren Folgendes umfasst:
Zurückschalten zum Anzeigen der Hauptmedieninhalten, wenn die Streaming-Ressourcen oberhalb des zuvor festgelegten Pegels liegen.

3. Verfahren nach Anspruch 1, wobei die Streaming-Ressourcen mindestens eines von Folgendem enthalten: (i) eine Anzahl von Hauptmedieninhalten, die verfügbar sind, um von einem Hauptausgabepuffer des Teilnehmergerätes zu einem Display gestreamt zu werden, und (ii) eine Streaming-Rate der Hauptmedieninhalte zwischen dem Kommunikationsnetz und dem Hauptausgabepuffer.

4. Verfahren nach Anspruch 1, das des Weiteren Folgendes umfasst:
Messen der Streaming-Ressourcen mit einer Messfunktionalität (106b) des Teilnehmergerätes.

5. Verfahren nach Anspruch 4, wobei das Messen des Weiteren Folgendes umfasst:
Empfangen von Zustandsinformationen von Haupt- und Sekundär-Ausgabepuffern, die die aus dem Kommunikationsnetz heruntergeladenen Haupt- und sekundären Medieninhalte speichern; und
Messen eines oder mehrerer Parameter des Kommunikationsnetzes, wobei der eine oder die mehreren Parameter mindestens eines von Folgendem enthalten: einen Verlust, eine Verzögerung und eine verfügbare Kapazität.

6. Verfahren nach Anspruch 1, das des Weiteren Folgendes umfasst:
Empfangen der sekundären Medieninhalte gleichzeitig mit den primären Medieninhalten, wenn die Streaming-Ressourcen oberhalb des zuvor festgelegten Pegels liegen.

7. Verfahren nach Anspruch 1, wobei die Umschaltfunktionalität dafür konfiguriert ist, einen Zustand eines Hauptausgabepuffers des Teilnehmergerätes und einen Zustand eines sekundären Ausgabepuffers des Teilnehmergerätes zu empfangen, wobei der Hauptausgabepuffer dafür konfiguriert ist, die Hauptmedieninhalte zu empfangen, und der Sekundär-Ausgabepuffer dafür konfiguriert ist, die sekundären Medieninhalte zu empfangen.

8. Verfahren nach Anspruch 7, wobei die Umschaltfunktionalität (108) dafür konfiguriert ist zu steuern, ob der Haupt- oder der Sekundär-Ausgabepuffer ein Display speist, das mit dem Teilnehmergerät verbunden ist.

9. Verfahren nach Anspruch 7, wobei eine Pufferdetektorfunktionalität (106a) des Teilnehmergerätes dafür konfiguriert ist, den Zustand des Haupt- und des Sekundär-Ausgabepuffers zu bestimmen und diese Informationen an die Umschaltfunktionalität zu übermitteln.

10. Verfahren nach Anspruch 1, das des Weiteren Folgendes umfasst:
kontinuierliches Zuführen der Hauptmedieninhalte oder der sekundären Medieninhalten zu einem Display dergestalt, dass dem Benutzer keine Hauptmedieninhalte präsentiert werden, die mit einer Qualität unterhalb der zuvor festgelegten Qualität oder mit einem eingefrorenen Bild gestreamt werden.

11. Teilnehmergerät (100), das dafür konfiguriert ist, selektiv Medieninhalte durch ein Kommunikationsnetz (200) herunterzuladen und die Medieninhalte selektiv anzuzeigen, wobei das Teilnehmergerät (100) Folgendes umfasst:
einen Hauptausgabepuffer (102), der dafür konfiguriert ist, Hauptmedieninhalte zu empfangen, wobei die Hauptmedieninhalte durch einen Benutzer des Teilnehmergerätes (100) ausgewählt werden;
eine Streaming-Detektionseinheit (106), die dafür konfiguriert ist zu bestimmen, ob Streaming-Ressourcen verfügbar sind, um eine zuvor festgelegte Qualität des Streamings der Hauptmedieninhalte aufrecht zu erhalten, wobei die Streaming-Detektionseinheit (106) des Weiteren dafür konfiguriert ist, einen Zustand des Hauptausgabepuffers (102) zu bestimmen;
einen Sekundär-Ausgabepuffer (104), der dafür konfiguriert ist, sekundäre Medieninhalte zu empfangen, nachdem die Hauptmedieninhalte über den Hauptausgabepuffer (102) empfangen wurden, wenn die Streaming-Ressourcen oberhalb eines zuvor festgelegten Pegels liegen, wobei die Streaming-Detektionseinheit (106) des Weiteren dafür konfiguriert ist, einen Zustand des Sekundär-Ausgabepuffers (104) zu bestimmen; und
eine Medienumschalteinheit (108), die mit der Streaming-Detektionseinheit (106) verbunden ist und dafür konfiguriert ist, anhand eines Ergebnisses der Streaming-Detektionseinheit (106) auszuwählen, ob die Hauptmedieninhalte oder die sekundären Medieninhalte angezeigt werden sollen,
wobei die Hauptmedieninhalte angezeigt werden, wenn die Streaming-Ressourcen oberhalb des zuvor festgelegten Pegels liegen, und die sekundäre Medieninhalte automatisch angezeigt werden, wenn die Streaming-Ressourcen unter dem zuvor festgelegten Pegel liegen.

12. Teilnehmergerät nach Anspruch 11, wobei die Streaming-Ressourcen mindestens eines von Folgendem enthalten:
(i) eine Anzahl von Hauptmedieninhalten, die verfügbar sind, um von einem Hauptausgabepuffer des Teilnehmergerätes zu einem Display gestreamt zu werden, und (ii) eine Streaming-Rate der Hauptmedieninhalte zwischen dem Kommunikationsnetz und dem Hauptausgabepuffer.

13. Teilnehmergerät nach Anspruch 11, wobei die Streaming-Detektionseinheit (106) Folgendes umfasst:
eine Pufferdetektionseinheit (106a), die mit den Haupt- und Sekundär-Ausgabepuffern und mit der Medienumschalteinheit verbunden ist und dafür konfiguriert ist, den Zustand der Haupt- und Sekundär-Ausgabepuffer zu bestimmen; und
eine Messungseinheit (106b), die mit dem Kommunikationsnetz und mit der Medienumschalteinheit verbunden ist und dafür konfiguriert ist, Streaming-Ressourcen des Kommunikationsnetzes zu messen.

14. Teilnehmergerät nach Anspruch 13, wobei die Pufferdetektionseinheit dafür konfiguriert ist, Zustandsinformationen der Haupt- und Sekundär-Ausgabepuffer zu empfangen, und die Messungseinheit dafür konfiguriert ist, einen oder mehrere Parameter des Kommunikationsnetzes zu messen, wobei der eine oder die mehreren Parameter mindestens eines von Folgendem enthalten: eine Verlust, eine Verzögerung und eine verfügbare Kapazität.

15. Medienanwendungsmodul (120) für ein Teilnehmergerät (100), das dafür konfiguriert ist, selektiv Medieninhalte durch ein Kommunikationsnetz (200) herunterzuladen und die Medieninhalte selektiv anzuzeigen, wobei das Medienanwendungsmodul (120) Folgendes umfasst:
eine Schnittstelle (122), die dafür konfiguriert ist, einen Zustand eines Hauptausgabepuffers (102) zu empfangen, der Hauptmedieninhalte empfängt, wobei die Hauptmedieninhalte durch einen Benutzer des Teilnehmergerätes ausgewählt werden;
eine Streaming-Detektionseinheit (106), die dafür konfiguriert ist zu bestimmen, ob Streaming-Ressourcen verfügbar sind, um eine zuvor festgelegte Qualität des Streamings der Hauptmedieninhalte aufrecht zu erhalten, wobei die Streaming-Detektionseinheit (106) des Weiteren dafür konfiguriert ist, den Zustand des Hauptausgabepuffers (102) zu empfangen;
wobei die Schnittstelle (122) des Weiteren dafür konfiguriert ist, einen Zustand eines Sekundär-Ausgabepuffers (104) zu empfangen, der sekundäre Medieninhalten empfängt, nachdem die Hauptmedieninhalte über den Hauptausgabepuffer (102) empfangen wurden, wenn die Streaming-Ressourcen oberhalb eines zuvor festgelegten Pegels liegen, wobei die Streaming-Detektionseinheit (106) des Weiteren dafür konfiguriert ist, den Zustand des Sekundär-Ausgabepuffers (104) zu empfangen; und
eine Medienumschalteinheit (108), die mit der Streaming-Detektionseinheit (106) verbunden ist und dafür konfiguriert ist, anhand eines Ergebnisses der Streaming-Detektionseinheit (106) auszuwählen, ob die Hauptmedieninhalte oder die sekundären Medieninhalte angezeigt werden sollen,
wobei die Hauptmedieninhalte angezeigt werden, wenn die Streaming-Ressourcen oberhalb des zuvor festgelegten Pegels liegen, und die sekundären Medieninhalte automatisch angezeigt werden, wenn die Streaming-Ressourcen unter dem zuvor festgelegten Pegel liegen.

## Revendications

1. Procédé de téléchargement sélectif d'un contenu de média via un réseau de communication (200) et d'affichage sélectif du contenu de média au terminal utilisateur (100) connecté au réseau de communication (200), le procédé comprenant les étapes consistant à :
recevoir le contenu de média principal au terminal utilisateur (100), dans lequel le contenu de média principal est choisi par un utilisateur du terminal utilisateur (100) ;
déterminer au niveau du terminal utilisateur s'il y a des ressources de transmission disponibles pour maintenir une qualité prédéterminée de transmission du contenu de média principal ;
recevoir un contenu de média secondaire au terminal utilisateur (100) après réception dudit contenu de média principal lorsque les ressources de transmission se situent au-dessus d'un niveau prédéterminé ; et
afficher le contenu de média principal lorsque les ressources de transmission se situent au-dessus du niveau prédéterminé et afficher automatiquement le contenu de média secondaire lorsque les ressources de transmission se situent en dessous du niveau prédéterminé,
dans lequel une fonctionnalité de commutation (108) du terminal utilisateur (100) est configurée pour choisir le contenu de média à afficher en fonction des ressources de transmission.

2. Procédé selon la revendication 1, comprenant en outre :
la recommutation pour afficher le contenu de média principal lorsque les ressources de transmission se situent au-dessus du niveau prédéterminé.

3. Procédé selon la revendication 1, dans lequel les ressources de transmission comprennent au moins l'un ou l'autre (i) d'une quantité de contenu de média principal disponible pour être transmise à un affichage à partir d'un tampon de lecture principal du terminal utilisateur et (ii) d'un débit de transmission du contenu de média principal entre le réseau de communication et le tampon de lecture principal.

4. Procédé selon la revendication 1, comprenant en outre :
la mesure des ressources de transmission avec une fonctionnalité de mesure (106b) du terminal utilisateur.

5. Procédé selon la revendication 4, dans lequel la mesure comprend en outre les étapes consistant à :
recevoir des informations d'état des tampons de lecture principal et secondaire qui stockent les contenus de média principal et secondaire téléchargés depuis le réseau de communication ; et
mesurer un ou plusieurs paramètres du réseau de communication, dans lequel les un ou plusieurs paramètres comprennent au moins l'un(e) ou l'autre d'une perte, d'un retard et d'une capacité disponible.

6. Procédé selon la revendication 1, comprenant en outre :
la réception du contenu de média secondaire simultanément avec le contenu de média principal lorsque les ressources de transmission se situent au-dessus du niveau prédéterminé.

7. Procédé selon la revendication 1, dans lequel la fonctionnalité de commutation est configurée pour recevoir un état d'un tampon de lecture principal du terminal utilisateur et un état d'un tampon de lecture secondaire du terminal utilisateur, dans lequel le tampon de lecture principal est configuré pour recevoir le contenu de média principal et le tampon de lecture secondaire est configuré pour recevoir le contenu de média secondaire.

8. Procédé selon la revendication 7, dans lequel la fonctionnalité de commutation (108) est configurée pour contrôler si le tampon de lecture principal ou secondaire alimente un affichage connecté au terminal utilisateur.

9. Procédé selon la revendication 7, dans lequel une fonctionnalité de détecteur de tampon (106a) du terminal utilisateur est configurée pour déterminer l'état des tampons de lecture principal et secondaire et fournir ces informations à la fonctionnalité de commutation.

10. Procédé selon la revendication 1, comprenant en outre :
la fourniture en continu à un affichage du contenu de média principal ou du contenu de média secondaire de sorte que l'utilisateur ne se voie pas présenter le contenu de média principal transmis avec une qualité inférieure à la qualité prédéterminée ou avec une image figée.

11. Terminal utilisateur (100) configuré pour télécharger sélectivement un contenu de média via un réseau de communication (200) et afficher sélectivement le contenu de média, le terminal utilisateur (100) comprenant :
un tampon de lecture principal (102) configuré pour recevoir le contenu de média principal, dans lequel le contenu de média principal est choisi par un utilisateur du terminal utilisateur (100) ;
une unité de détection de transmission (106) configurée pour déterminer s'il y a des ressources de transmission disponibles pour maintenir une qualité prédéterminée de transmission du contenu de média principal, dans lequel l'unité de détection de transmission (106) est également configurée pour déterminer un état du tampon de lecture principal (102) ;
un tampon de lecture secondaire (104) configuré pour recevoir le contenu de média secondaire après que ledit contenu de média principal a été reçu via ledit tampon de lecture principal (102) lorsque les ressources de transmission se situent au-dessus d'un niveau prédéterminé, dans lequel l'unité de détection de transmission (106) est également configurée pour déterminer un état du tampon de lecture secondaire (104) ; et
une unité de commutation de média (108) connectée à l'unité de détection de transmission (106) et configurée pour choisir s'il faut afficher le contenu de média principal ou le contenu de média secondaire sur la base d'un résultat de l'unité de détection de transmission (106),
dans lequel le contenu de média principal est affiché lorsque les ressources de transmission se situent au-dessus du niveau prédéterminé et le contenu de média secondaire est automatiquement affiché lorsque les ressources de transmission se situent en dessous du niveau prédéterminé.

12. Terminal utilisateur selon la revendication 11, dans lequel les ressources de transmission comprennent au moins l'un ou l'autre (i) d'une quantité de contenu de média principal disponible pour être transmise à un dispositif d'affichage depuis le tampon de lecture principal et (ii) d'un débit de transmission du contenu de média principal entre le réseau de communication et le tampon de lecture principal.

13. Terminal utilisateur selon la revendication 11, dans lequel l'unité de détection de transmission (106) comprend :
une unité de détection de tampon (106a) connectée aux tampons de lecture principal et secondaire et à l'unité de commutation de média et configurée pour déterminer l'état des tampons de lecture principal et secondaire ; et
une unité de mesure (106b) connectée au réseau de commutation et à l'unité de commutation de média et configurée pour mesurer les ressources de transmission du réseau de communication.

14. Terminal utilisateur selon la revendication 13, dans lequel l'unité de détection de tampon est configurée pour recevoir des informations d'état des tampons de lecture principal et secondaire et l'unité de mesure est configurée pour mesurer un ou plusieurs paramètres du réseau de communication, dans lequel les un ou plusieurs paramètres comprennent au moins l'un(e) ou l'autre d'une perte, d'un retard et d'une capacité disponible.

15. Module d'application de média (120) pour un terminal utilisateur (100) configuré pour télécharger sélectivement un contenu de média via un réseau de communication (200) et afficher sélectivement le contenu de média, le module d'application de média (120) comprenant :
une interface (122) configurée pour recevoir un état d'un tampon de lecture principal (102) qui reçoit un contenu de média principal, dans lequel le contenu de média principal est choisi par un utilisateur du terminal utilisateur ;
une unité de détection de transmission (106) configurée pour déterminer s'il y a des ressources de transmission disponibles pour maintenir une qualité prédéterminée de transmission du contenu de média principal, dans lequel l'unité de détection de transmission (106) est également configurée pour recevoir l'état du tampon de lecture principal (102) ;
l'interface (122) est en outre configurée pour recevoir un état d'un tampon de lecture secondaire (104) qui reçoit un contenu de média secondaire une fois que ledit contenu de média principal a été reçu via ledit tampon de lecture principal (102) lorsque les ressources de transmission se situent au-dessus d'un niveau prédéterminé, dans lequel l'unité de détection de transmission (106) est également configurée pour recevoir l'état du tampon de lecture secondaire (104) ; et
une unité de commutation de média (108) connectée à l'unité de détection de transmission (106) et configurée pour choisir s'il faut afficher le contenu de média principal ou le contenu de média secondaire sur la base d'un résultat de l'unité de détection de transmission (106),
dans lequel le contenu de média principal est affiché lorsque les ressources de transmission se situent au-dessus du niveau prédéterminé et le contenu de média secondaire est automatiquement affiché lorsque les ressources de transmission se situent en dessous du niveau prédéterminé.
